# EUROPEAN PATENT APPLICATION

(11) **EP 2 851 767 A1**
(43) Date of publication of application: **25.03.2015**
(21) Application number: 14735386.6
(22) Date of filing: 07.01.2014
(51) Int. Cl.: G06F 3/041

(54) **METHOD AND DEVICE FOR SETTING TOUCH VIBRATION FUNCTION OF TOUCH SCREEN**

(30) Priority: 07.01.2013 CN 201310005190
(71) Applicant: Huawei Device Co., Ltd., Longgang District Shenzhen Guangdong 518129 (CN)
(72) Inventor: LI, Zhihua, Shenzhen Guangdong 518129 (CN)
(74) Representative: Pfenning, Meinig & Partner GbR
(86) International application number: PCT/CN2014/070231
(87) International publication number: WO 2014/106494

(57) **Abstract**

The present invention, which relates to the field of mobile terminal technologies, discloses a method and an apparatus for setting a touch vibration function of a touchscreen, which solve a problem that user experience is compromised and power consumption is increased because a touch vibration function of the touchscreen cannot be normally disabled during use of a current capacitive touchscreen mobile phone on which WP8 is installed. The method includes: receiving a function setting instruction input by a user by using an operation interface; changing a value of a preset registration entry according to the function setting instruction; receiving touch information generated when the touchscreen is touched; and performing a touch vibration according to the touch information and reporting the touch information to an operating system when the value of the registration entry determines that a touch vibration is to be performed; or reporting the touch information to an operating system when the value of the registration entry determines that a touch vibration is not to be performed. The present invention is applicable to a WP8 capacitive touchscreen mobile phone.

## Description

### TECHNICAL FIELD

The present invention relates to the field of mobile terminal technologies, and in particular, to a method and an apparatus for setting a touch vibration function of a touchscreen.

### BACKGROUND

Windows Phone 8 (hereinafter referred to as WP8) is a mobile phone operating system newly released by Microsoft on June 21, 2012, is the latest version of a Windows Phone system, and also is the third large version of the current Windows Phone system.

In a capacitive touchscreen mobile phone on which WP8 is installed, there is an operation interface displayed on a capacitive touchscreen, where the operation interface includes a touchscreen used to receive an instruction input by a user, and includes a display area used to display an execution result of an instruction. To notify a user that a currently-performed touch operation is specific to the touchscreen, a vibration feedback function is set in WP8. That is, the mobile phone vibrates each time the user touches the touchscreen.

While the user is using the foregoing capacitive touchscreen mobile phone, it is expected that the mobile phone does not vibrate each time when the touchscreen is touched, but this cannot be implemented by using a manual setting method because an option of enabling or disabling the vibration feedback function does not exist in a settings menu of WP8. That is, after the capacitive touchscreen mobile phone on which WP8 is installed is powered on, a touch vibration function is enabled by default, and the user cannot disable the function, which compromises user experience. In addition, frequent vibrations increases power consumption of the mobile phone.

### SUMMARY

Embodiments of the present invention provide a method and an apparatus for setting a touch vibration function of a touchscreen, which solve a problem that user experience is compromised and power consumption is increased because a touch vibration function of a touchscreen cannot be normally disabled during use of a current capacitive touchscreen mobile phone on which WP8 is installed.

To achieve the foregoing objectives, the following technical solutions are used in the embodiments of the present invention:

According to a first aspect, the present invention provides a method for setting a touch vibration function of a touchscreen, including:
receiving a function setting instruction input by a user by using an operation interface;
changing a value of a preset registration entry according to the function setting instruction;
receiving touch information generated when the touchscreen is touched; and
performing a touch vibration according to the touch information and reporting the touch information to an operating system when the value of the registration entry determines that a touch vibration is to be performed; or
reporting the touch information to an operating system when the value of the registration entry determines that a touch vibration is not to be performed.

In a first possible implementation manner of the first aspect, the changing a value of a preset registration entry according to the function setting instruction specifically includes:
changing the value of the registration entry to a first value when the function setting instruction is a touch vibration enabling instruction; and changing the value of the registration entry to a second value that is different from the first value when the function setting instruction is a touch vibration disabling instruction.

In a second possible implementation manner of the first aspect, the performing a touch vibration according to the touch information and reporting the touch information to an operating system when the value of the registration entry determines that a touch vibration is to be performed specifically includes: sending an enabling instruction to a vibration motor corresponding to the touch information when the value of the registration entry is the first value, so as to enable the vibration motor to start a vibration; and reporting the touch information to the operating system to enable the operating system to perform a touch operation related to the touch information.

In a third possible implementation manner of the first aspect, the reporting the touch information to an operating system when the value of the registration entry determines that a touch vibration is not to be performed specifically includes: reporting the touch information to the operating system when the value of the registration entry is the second value, so as to enable the operating system to perform a touch operation related to the touch information.

According to a second aspect, the present invention provides an apparatus for setting a touch vibration function of a touchscreen, including:
a first receiving unit, configured to receive a function setting instruction;
an entry value changing unit, configured to change a value of a registration entry according to the function setting instruction;
a second receiving unit, configured to receive touch information generated when the touchscreen is touched; and
an executing unit, configured to, when the value of the registration entry determines that a touch vibration is to be performed, perform a touch vibration according to the touch information and report the touch information to an operating system, where the executing unit is further configured to report the touch information to the operating system when the value of the registration entry determines that a touch vibration is not to be performed.

In a first possible implementation manner of the second aspect, the entry value changing unit includes: a first entry value changing subunit, configured to change the value of the registration entry to a first value when the function setting instruction is a touch vibration enabling instruction; and change the value of the registration entry to a second value that is different from the first value when the function setting instruction is a touch vibration disabling instruction.

In a second possible implementation manner of the second aspect, the executing unit includes: a vibration enabling subunit, configured to send an enabling instruction to a vibration motor corresponding to the touch information when the value of the registration entry is the first value, so as to enable the vibration motor to start a vibration; and a first executing subunit, configured to, after the vibration enabling subunit sends the enabling instruction to the vibration motor, report the touch information to the operating system to enable the operating system to perform a touch operation related to the touch information.

In a third possible implementation manner of the second aspect, the executing unit further includes: a second executing subunit, configured to report the touch information to the operating system when the value of the registration entry is the second value, so as to enable the operating system to perform a touch operation related to the touch information.

In a method for setting a touch vibration function of a touchscreen provided in the embodiments, a touchscreen controller in a WP8 capacitive touchscreen mobile phone can change, before a touchscreen is touched, a value of a preset registration entry according to a function setting instruction input by a user by using an operation interface, and can determine, after the touchscreen is touched and according to touch information generated when the touchscreen is touched and the value of the registration entry, whether to perform a touch vibration function, so that the user can set a touch vibration function of the touchscreen in the WP8 capacitive touchscreen mobile phone according to the user's needs, thereby improving user experience and reducing power consumption of the mobile phone.

### BRIEF DESCRIPTION OF DRAWINGS

FIG. 1 is a flowchart of a method for setting a touch vibration function of a touchscreen according to Embodiment 1 of the present invention;
FIG. 2 is a block diagram of an apparatus for setting a touch vibration function of a touchscreen according to Embodiment 1 of the present invention;
FIG. 3 is a flowchart of another method for setting a touch vibration function of a touchscreen according to Embodiment 2 of the present invention;
FIG. 4 is a block diagram of another apparatus for setting a touch vibration function of a touchscreen according to Embodiment 3 of the present invention; and
FIG. 5 is a block diagram of yet another apparatus for setting a touch vibration function of a touchscreen according to Embodiment 4 of the present invention.

### DESCRIPTION OF EMBODIMENTS

### Embodiment 1

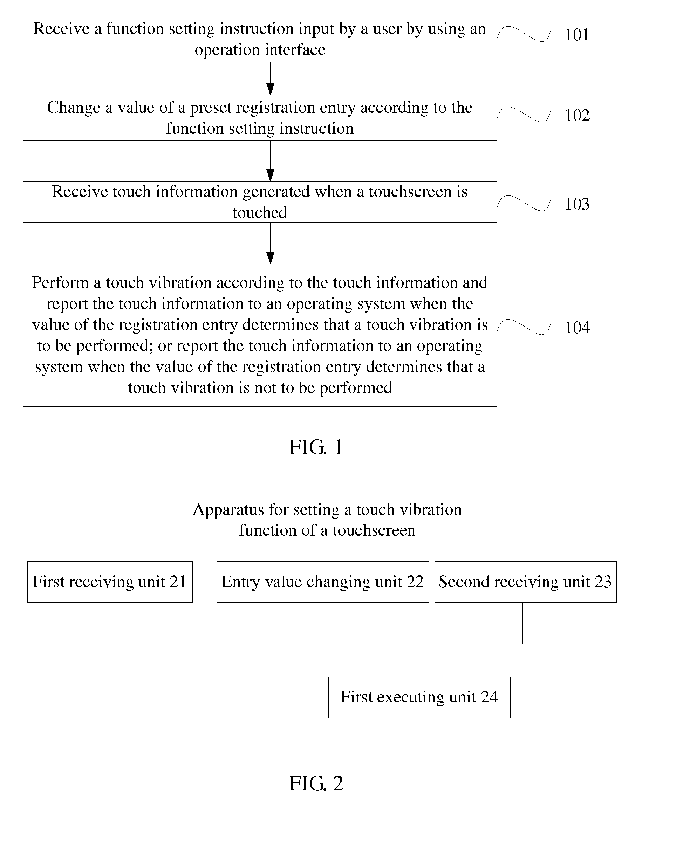

This embodiment provides a method for setting a touch vibration function of a touchscreen. As shown in FIG. 1, the method may be executed by a terminal, and may also be executed by a touchscreen controller in a WP8 capacitive touchscreen mobile phone, which is not limited in this embodiment of the present invention. The method includes the following steps.

101. Receive a function setting instruction input by a user by using an operation interface.

Specifically, the touchscreen controller receives the function setting instruction input by the user by using the operation interface in the WP8 capacitive touchscreen mobile phone, where an input method of the instruction may be specifically that the user uses a finger to touch a function setting menu on a main operation interface of a touchscreen and tap, in the menu, a button related to a touch vibration function. Certainly, the button related to the touch vibration function may not be set in the menu, and may be directly set on the main operation interface for the user to tap.

102. Change a value of a preset registration entry according to the function setting instruction.

Specifically, the registration entry is preset in the WP8 capacitive touchscreen mobile phone. The touchscreen controller correspondingly changes a parameter of the registration entry according to the received function setting instruction, so as to make the value of the registration entry correspond to an operation specified by the function setting instruction. For example, when the operation specified by the function setting instruction is a touch vibration enabling function, the value of the registration entry is changed to 1 or another value by the touchscreen controller.

103. Receive touch information generated when the touchscreen is touched.

Specifically, after changing the value of the registration entry, the touchscreen controller can complete setting of the touch vibration function of the touchscreen only when the touchscreen is touched by the user's finger. The operation interface generates the touch information when the touchscreen on the operation interface is touched by the user's finger. For example, the operation interface generates touch information about a resistance change or a capacitance change, where the touch information can be transferred to the touchscreen controller.

104. Perform a touch vibration according to the touch information and report the touch information to an operating system when the value of the registration entry determines that a touch vibration is to be performed; or, report the touch information to an operating system when the value of the registration entry determines that a touch vibration is not to be performed.

Specifically, as described in step 102, the value of the registration entry corresponds to the operation specified by the function setting instruction. Therefore, the touchscreen controller determines whether the value of the registration entry determines that a touch vibration is to be performed according to the touch information. When the touchscreen controller determines that the value of the registration entry determines that a touch vibration is to be performed, the touchscreen controller performs a touch vibration and reports the touch information to the operating system; when the touchscreen controller determines that the value of the registration entry determines that a touch vibration is not to be performed, the touchscreen controller only reports the touch information to the operating system, but does not perform a touch vibration.

That is, an action is performed according to the operation specified by the function setting instruction when the touchscreen is touched by the user's finger. When the operation specified by the function setting instruction is a touch vibration enabling function, the touchscreen controller performs corresponding setting to enable the WP8 capacitive touchscreen mobile phone to implement the function. Likewise, when the operation specified by the function setting instruction is a touch vibration disabling function, the touchscreen controller performs corresponding setting to enable the WP8 capacitive touchscreen mobile phone to implement the function.

In a method for setting a touch vibration function of a touchscreen provided in this embodiment, a touchscreen controller in a WP8 capacitive touchscreen mobile phone can change, before a touchscreen is touched, a value of a preset registration entry according to a function setting instruction input by a user by using an operation interface, and can determine, after the touchscreen is touched and according to touch information generated when the touchscreen is touched and the value of the registration entry, whether to perform a touch vibration function, so that the user can set a touch vibration function of the touchscreen in the WP8 capacitive touchscreen mobile phone according to the user's needs, thereby improving user experience and reducing power consumption of the mobile phone.

This embodiment further provides an apparatus for setting a touch vibration function of a touchscreen, where the apparatus is a touchscreen controller in a WP8 capacitive touchscreen mobile phone. As shown in FIG. 2, the apparatus includes: a first receiving unit 21, configured to receive a function setting instruction; an entry value changing unit 22, configured to change a value of a registration entry according to the function setting instruction; a second receiving unit 23, configured to receive touch information generated when the touchscreen is touched; and an executing unit 24, configured to, when the value of the registration entry determines that a touch vibration is to be performed, perform a touch vibration according to the touch information and report the touch information to an operating system, where the executing unit 24 is further configured to report the touch information to the operating system when the value of the registration entry determines that a touch vibration is not to be performed.

In an apparatus for setting a touch vibration function of a touchscreen provided in this embodiment, an entry value changing unit can perform, before a touchscreen is touched, a value of a preset registration entry according to a function setting instruction input by a user by using an operation interface, and a first executing unit can determine, after the touchscreen is touched and according to the value of the registration entry, whether to perform a touch vibration against touch information, so that the user can set a touch vibration function of a touchscreen in a WP8 capacitive touchscreen mobile phone according to the user's needs, thereby improving user experience and reducing power consumption of the mobile phone.

### Embodiment 2

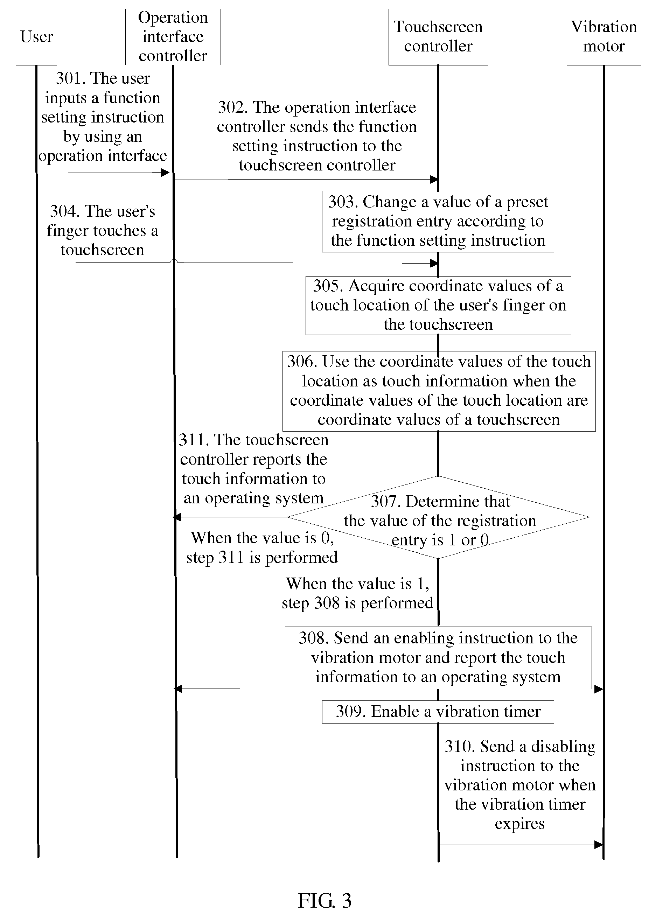

This embodiment provides a method for setting a touch vibration function of a touchscreen. As shown in FIG. 3, the method is executed by a touchscreen controller in a WP8 capacitive touchscreen mobile phone. The method includes the following steps.

301. A user inputs a function setting instruction by using an operation interface.

Specifically, an input method of the function setting instruction may specifically be that the user uses a finger to touch a function setting menu on a main operation interface of a touchscreen and tap, in the menu, a button related to a touch vibration function. Certainly, the button related to the touch vibration function may not be set in the menu, and may be directly set on the main operation interface for the user to tap.

302. An operation interface controller sends the function setting instruction to the touchscreen controller.

Specifically, the operation interface controller converts the menu tapped by the user into an electrical signal corresponding to the function setting instruction, and sends the function setting instruction to the touchscreen controller by using an electrical connection between the operation interface controller and the touchscreen controller.

303. The touchscreen controller changes a value of a preset registration entry according to the function setting instruction.

Specifically, the registration entry is preset in the WP8 capacitive touchscreen mobile phone. The touchscreen controller correspondingly changes a parameter of the registration entry according to the received function setting instruction, so as to make the value of the registration entry correspond to an operation specified by the function setting instruction.

When the touchscreen controller determines that the value of the registration entry determines that a touch vibration is to be performed according to touch information, the value of the registration entry is changed to a first value; when the touchscreen controller determines that the value of the registration entry determines that a touch vibration is not to be performed according to the touch information, the value of the registration entry is changed to a second value that is different from the first value.

The first value and the second value may be set according to hardware configuration of the WP8 capacitive touchscreen mobile phone. For example, when storage space occupied by the value of the registration entry is one binary bit, the first value may be set to 1, and the second value may be set to 0; and vice versa.

304. The user's finger touches a touchscreen.

305. The touchscreen controller acquires coordinate values of a touch location of the user's finger on the touchscreen.

306. Use the coordinate values of the touch location as touch information when the coordinate values of the touch location are coordinate values of the touchscreen.

Specifically, in a WP8 capacitive touchscreen mobile phone, there is an operation interface displayed on a touchscreen, where the operation interface includes a touchscreen used to receive an instruction input by a user, and includes a display area used to display an execution result of an instruction. When the user's finger touches the touchscreen, the user's finger may touch the surface of the touchscreen, or may touch the display area, where the touchscreen determines, according to whether coordinate values of a touch location are coordinate values of the touchscreen, whether the touchscreen is touched.

307. The touchscreen controller determines that the value of the registration entry is 1 or 0.

Specifically, as described above, when the touchscreen controller determines that the function setting instruction is a touch vibration enabling instruction, the value of the registration entry is changed to the first value; when the touchscreen controller determines that the function setting instruction is a touch vibration disabling instruction, the value of the registration entry is changed to the second value that is different from the first value. The first value may be 1, and the second value may be 0.

When the touchscreen controller determines that the value of the registration entry is 1, step 308 is performed; when the touchscreen controller determines that the value of the registration entry is 0, step 311 is performed.

308. The touchscreen controller sends an enabling instruction to a vibration motor corresponding to the touch information and reports the touch information to an operating system, so as to enable the operating system to perform a touch operation related to the operation information.

Specifically, the vibration motor is in the WP8 capacitive touchscreen mobile phone, and after the vibration motor receives the enabling instruction, the vibration motor starts a vibration, and then the mobile phone starts to vibrate. The operating system is used to control and manage a user interface controller, the touchscreen controller, the vibration motor, and other hardware units to complete various system functions. The touchscreen usually corresponds to one or more system functions. After the touchscreen controller reports the touch information corresponding to the touchscreen to the operating system, the operating system performs a touch operation related to the touch information (that is, the touchscreen).

309. The touchscreen controller enables a vibration timer.

Specifically, the vibration timer is used to ensure that a vibration of the mobile phone can last for a specified time, and practice has proved that when a cycle of the vibration timer is 0.1-0.3 seconds, the vibration timer can bring the most comfortable user experience.

310. The touchscreen controller sends a disabling instruction to the vibration motor when the vibration timer expires.

Specifically, after receiving the disabling instruction, the vibration motor stops vibrating.

311. The touchscreen controller reports the touch information to the operating system.

When the touchscreen controller determines that the value of the registration entry is 0, it indicates that the function setting instruction is a touch vibration disabling instruction. In this case, no operation needs to be performed on the vibration motor. After the touch information corresponding to the touchscreen is reported to the operating system, the operating system performs the touch operation related to the touch information (that is, the touchscreen).

In a method for setting a touch vibration function of a touchscreen provided in this embodiment, a touchscreen controller in a WP8 capacitive touchscreen mobile phone can change, before a touchscreen is touched, a value of a preset registration entry according to a function setting instruction input by a user by using an operation interface, and can determine, after the touchscreen is touched and according to touch information generated when the touchscreen is touched and the value of the registration entry, whether to perform a touch vibration function of the touchscreen, so that the user can set the touch vibration function of the touchscreen in the WP8 capacitive touchscreen mobile phone according to the user's needs, thereby improving user experience and reducing power consumption of the mobile phone.

### Embodiment 3

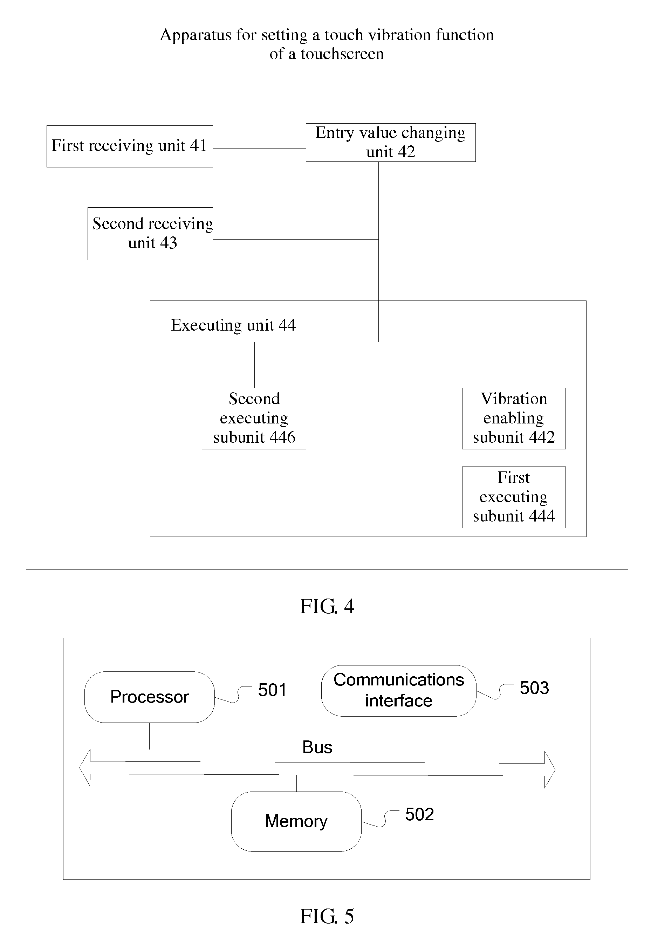

This embodiment provides a terminal having a touchscreen, where the terminal may be used to perform the methods described in Embodiment 1 and Embodiment 2 of the present invention. As shown in FIG. 4, the terminal includes: a first receiving unit 41, configured to receive a function setting instruction; an entry value changing unit 42, configured to change a value of a registration entry according to the function setting instruction; a second receiving unit 43, configured to receive touch information generated when the touchscreen is touched; and an executing unit 44, configured to, when the value of the registration entry determines that a touch vibration is to be performed, perform a touch vibration according to the touch information and report the touch information to an operating system, where the executing unit is further configured to report the touch information to the operating system when the value of the registration entry determines that a touch vibration is not to be performed.

The entry value changing unit 42 is configured to change the value of the registration entry to a first value when the function setting instruction is a touch vibration enabling instruction; and change the value of the registration entry to a second value that is different from the first value when the function setting instruction is a touch vibration disabling instruction. For example, the first value is 1, and the second value is 0.

The executing unit 44 includes: a vibration enabling subunit 442, configured to send an enabling instruction to a vibration motor corresponding to the touch information when the value of the registration entry is the first value, so as to enable the vibration motor to start a vibration.

The executing unit 44 further includes: a first executing subunit 444, configured to, after the vibration enabling subunit 442 sends the enabling instruction to the vibration motor, report the touch information to the operating system to enable the operating system to perform a touch operation related to the touch information.

The executing unit 44 further includes: a second executing subunit 446, configured to report the touch information to the operating system when the value of the registration entry is the second value, so as to enable the operating system to perform a touch operation related to the touch information.

The following describes the foregoing units and the method performed by the units in detail. The apparatus is a touchscreen controller in a WP8 capacitive touchscreen mobile phone.

An operation interface controller converts a menu tapped by a user into an electrical signal corresponding to the function setting instruction, and sends the function setting instruction to the first receiving unit 41 of the touchscreen controller by using an electrical connection between the operation interface controller and the touchscreen controller. The registration entry is preset in the WP8 capacitive touchscreen mobile phone. The entry value changing unit 42 of the touchscreen controller correspondingly changes a parameter of the registration entry according to the function setting instruction received by the first receiving unit 41, so as to make the value of the registration entry correspond to an operation specified by the function setting instruction.

When the function setting instruction is a touch vibration enabling instruction, the entry value changing unit 42 changes the value of the registration entry to the first value; when the function setting instruction is a touch vibration disabling instruction, the entry value changing unit 42 changes the value of the registration entry to the second value that is different from the first value. The first value and the second value may be set according to hardware configuration of the WP8 capacitive touchscreen mobile phone. For example, when storage space occupied by the value of the registration entry is one binary bit, the first value may be set to 1, and the second value may be set to 0; and vice versa.

The second receiving unit 43 is configured to receive the touch information generated when the touchscreen is touched. In a WP8 capacitive touchscreen mobile phone, there is an operation interface displayed on a touchscreen, where the operation interface includes a touchscreen used to receive an instruction input by a user, and includes a display area used to display an execution result of an instruction. When the user's finger touches the touchscreen, the user's finger may touch the surface of the touchscreen, or may touch the display area, where the touchscreen determines, according to whether coordinate values of a touch location are coordinate values of the touchscreen, whether the touchscreen is touched. When the second receiving unit 43 receives the touch information generated when the touchscreen is touched, the touchscreen controller determines that the value of the registration entry is 1 or 0.

When the function setting instruction is a touch vibration enabling instruction, the entry value changing unit 42 changes the value of the registration entry to the first value; when the function setting instruction is a touch vibration disabling instruction, the entry value changing unit 42 changes the value of the registration entry to the second value that is different from the first value. The first value may be 1, and the second value may be 0.

The executing unit 44 includes the vibration enabling subunit 442, where the vibration enabling subunit 442 is configured to determine, according to the value of the registration entry, whether to perform a touch vibration. The vibration motor is in the WP8 capacitive touchscreen mobile phone. After receiving the enabling instruction, the vibration motor corresponding to the foregoing touch information starts a vibration, and then the mobile phone starts to vibrate.

The executing unit 44 further includes the first executing subunit 444, configured to report, after the enabling instruction is sent to the vibration motor, the touch information to the operating system to enable the operating system to perform the touch operation related to the touch information.

Specifically, the operating system is used to control and manage a user interface controller, the touchscreen controller, the vibration motor, and other hardware units to complete various system functions. The touchscreen usually corresponds to one or more system functions. After the first executing subunit 444 of the touchscreen controller reports the touch information corresponding to the touchscreen to the operating system, the operating system performs the touch operation related to the touch information (that is, the touchscreen).

The touchscreen controller may enable a vibration timer, where the vibration timer is used to ensure that a vibration of the mobile phone can last for a specified time, and practice has proved that when a cycle of the vibration timer is 0.1-0.3 seconds, the vibration timer can bring the most comfortable user experience. The touchscreen controller sends a disabling instruction to the vibration motor when the vibration timer expires. After receiving the disabling instruction, the vibration motor stops vibrating.

The executing unit 44 further includes: the second executing subunit 446, configured to report the touch information to the operating system to enable the operating system to perform the touch operation related to the touch information. When the value of the registration entry is 0, it indicates that the function setting instruction is a touch vibration disabling instruction. In this case, no operation needs to be performed on the vibration motor. After the second executing unit 446 reports the touch information corresponding to the touchscreen to the operating system, the operating system performs the touch operation related to the touch information (that is, the touchscreen).

In an apparatus for setting a touch vibration function of a touchscreen provided in this embodiment, an entry value changing unit can change, before a touchscreen is touched, a value of a preset registration entry according to a function setting instruction input by a user by using an operation interface, and a first executing unit can implement, after the touchscreen is touched, enabling and disabling of a touch vibration function of the touchscreen according to touch information generated when the touchscreen is touched and the value of the registration entry, so that the user can set a touch vibration function of a touchscreen in a WP8 capacitive touchscreen mobile phone according to the user's needs, thereby improving user experience and reducing power consumption of the mobile phone.

### Embodiment 4

This embodiment provides a terminal having a touchscreen, where the terminal is used to perform the methods described in Embodiment 1 and Embodiment 2 of the present invention. As shown in FIG. 5, the terminal includes: at least one processor 501, a memory 502, a communications interface 503, and a bus. The processor 501, the memory 502, and the communications interface 503 are connected to each other and communicate with each other by using the bus. The bus may be an Industry Standard Architecture (Industry Standard Architecture, ISA for short) bus, a Peripheral Component Interconnect (Peripheral Component, PCI for short) bus, an Extended Industry Standard Architecture (Extended Industry Standard Architecture, EISA for short) bus, or the like. The bus may be classified into an address bus, a data bus, a control bus, and the like. For ease of illustration, only one bold line is used in FIG. 5 to represent the bus, which, however, does not mean that there is only one bus or only one type of bus. Where:

The memory 502 is configured to store executable program code, where the program code includes a computer operation instruction. The memory 502 may include a high-speed RAM memory, and may further include a non-volatile memory (non-volatile memory), for example, at least one disk memory.

The processor 501 runs a program corresponding to the executable program code by reading the executable program code stored in the memory 502, so as to: receive a function setting instruction input by a user by using an operation interface; change a value of a preset registration entry according to the function setting instruction; receive touch information generated when the touchscreen is touched; and enable or disable a touch vibration function of the touchscreen according to the touch information and the value of the registration entry.

The processor 501 may be a central processing unit (Central Processing Unit, CPU for short), or an application specific integrated circuit (Application Specific Integrated Circuit, ASIC for short), or one or more integrated circuits configured to implement this embodiment of the present invention.

It should be noted that in addition to having the functions described above, the processor 501 may be further configured to perform other procedures in the foregoing method embodiments, and details are not described herein again.

The communications interface 503 is mainly configured to implement communication between a touchscreen controller in this embodiment and another device or apparatus.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for setting a touch vibration function of a touchscreen, comprising:
receiving a function setting instruction input by a user by using an operation interface;
changing a value of a preset registration entry according to the function setting instruction;
receiving touch information generated when the touchscreen is touched; and
performing a touch vibration according to the touch information and reporting the touch information to an operating system when the value of the registration entry determines that a touch vibration is to be performed; or
reporting the touch information to an operating system when the value of the registration entry determines that a touch vibration is not to be performed.

2. The method according to claim 1, wherein the changing a value of a registration entry according to the function setting instruction specifically comprises:
changing the value of the registration entry to a first value when the function setting instruction is a touch vibration enabling instruction; and
changing the value of the registration entry to a second value that is different from the first value when the function setting instruction is a touch vibration disabling instruction.

3. The method according to claim 2, wherein the performing a touch vibration according to the touch information and reporting the touch information to an operating system when the value of the registration entry determines that a touch vibration is to be performed specifically comprises:
sending an enabling instruction to a vibration motor corresponding to the touch information when the value of the registration entry is the first value, so as to enable the vibration motor to start a vibration; and
reporting the touch information to the operating system to enable the operating system to perform a touch operation related to the touch information.

4. The method according to claim 2, wherein the reporting the touch information to an operating system when the value of the registration entry determines that a touch vibration is not to be performed specifically comprises:
reporting the touch information to the operating system when the value of the registration entry is the second value, so as to enable the operating system to perform a touch operation related to the touch information.

5. A terminal containing a touchscreen, comprising:
a first receiving unit, configured to receive a function setting instruction;
an entry value changing unit, configured to change a value of a registration entry according to the function setting instruction;
a second receiving unit, configured to receive touch information generated when the touchscreen is touched; and
an executing unit, configured to, when the value of the registration entry determines that a touch vibration is to be performed, perform a touch vibration according to the touch information and report the touch information to an operating system, wherein the executing unit is further configured to report the touch information to the operating system when the value of the registration entry determines that a touch vibration is not to be performed.

6. The apparatus according to claim 5, wherein the entry value changing unit is configured to change the value of the registration entry to a first value when the function setting instruction is a touch vibration enabling instruction; and
change the value of the registration entry to a second value that is different from the first value when the function setting instruction is a touch vibration disabling instruction.

7. The apparatus according to claim 6, wherein the executing unit comprises:
a vibration enabling subunit, configured to send an enabling instruction to a vibration motor corresponding to the touch information when the value of the registration entry is the first value, so as to enable the vibration motor to start a vibration; and
a first executing subunit, configured to report the touch information to the operating system when the vibration enabling subunit sends the enabling instruction to the vibration motor, so as to enable the operating system to perform a touch operation related to the touch information.

8. The apparatus according to claim 7, wherein the executing unit further comprises: a second executing subunit, configured to report the touch information to the operating system when the value of the registration entry is the second value, so as to enable the operating system to perform a touch operation related to the touch information.
